# EUROPÄISCHE PATENTSCHRIFT

(11) **EP 2 070 753 B1**
(45) Veröffentlichungstag und Bekanntmachung des Hinweises auf die Patenterteilung: **17.08.2016**
(21) Anmeldenummer: 08021313.5
(22) Anmeldetag: 09.12.2008
(51) Int. Cl.: B60J 7/20

(54) **Cabriolet-Fahrzeug mit einem zur Freigabe einer Durchtrittsöffnung für das Dach öffnungsfähigen Deckelteil**
Convertible vehicle with a cover which can be opened to allow an entry or exit opening
Véhicule cabriolet doté d'une partie de capote pouvant s'ouvrir en vue de la libération d'une ouverture de passage pour le toit

(30) Priorität: 12.12.2007 DE 102007060361
(43) Veröffentlichungstag der Anmeldung: 17.06.2009
(73) Patentinhaber: Valmet Automotive Oy, 23500 Uusikaupunki (FI)
(72) Erfinder: Theuerkauf, Jürgen, 49565 Bramsche (DE)
(74) Vertreter: Kronthaler, Schmidt & Coll.

(56) Entgegenhaltungen:
- EP-A1- 0 502 295
- WO-A1-2005/084982
- DE-A1- 10 107 079
- DE-A1- 19 940 959
- FR-A- 2 856 958
- US-A1- 2004 222 658

## Beschreibung

Die Erfindung betrifft ein Cabriolet-Fahrzeug mit einem Dach, das zumindest teilweise unterhalb eines DeckelteiLs ablegbar ist, das in einem ersten Öffnungssinn zur Freigabe einer Durchtrittsöffnung für das Dach öffnungsfähig ist, nach dem Oberbegriff des Anspruchs 1.

Ein solches Cabriolet-Fahrzeug ist aus Dokument EP 0502295 A1 bekannt.

Es sind Deckelteile bekannt, bei denen von einer seitlichen Antriebseinheit aus heckwärts weisende Hebel vorgesehen sind, die in abgelegter Stellung des Daches auf dieses aufgedrückt werden. Der bauliche Aufwand für eine derartige Lösung ist hoch. Zudem ist der Abstand der Niederhalter zu den Antriebsorganen hoch, so dass sich nur eine geringe Kraft zum Niederhalten des Daches ergibt. Weiterhin ist das Dach unterhalb des Niederhalters nach unten beweglich, so dass die Lagesicherung des Daches nur unzureichend ist.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein Deckelteilmodul mit den Merkmalen des Anspruchs 10. Vorteilhafte Ausgestaltungen und Weiterbildungen der Erfindung sind in den weiteren Ansprüchen 2 bis 9 angegeben.

Erfindungsgemäß ist bei einem Cabriolet-Fahrzeug, bei dem das Dach zumindest teilweise unterhalb eines Deckelteils ablegbar ist, welches zumindest in einem ersten Öffnungssinn mit einem vorderen Bereich heckwärts und aufwärts zur Freigabe einer Durchtrittsöffnung für das Dach öffnungsfähig ist, die Lagesicherung des Daches vereinfacht. Der oder die hierfür vorgesehene(n) Niederhalter erfordern durch ihre Zuordnung zu ohnehin vorhandenen Trägerkörpern für das Deckelteil keine gesonderten Bauteile, zum anderen ist dadurch, dass die Trägerkörper bei geschlossenem Deckelteil von den Sockeln mit zumindest einer Längskomponente in Fahrtrichtung weisen und mit dem Deckelteil zur Freigabe der Durchtrittsöffnung für das Dach beweglich sind, eine Verbesserung der Hebelverhältnisse erreicht. Die Sockel können weit hinten im Fahrzeug stehen, so dass die Niederhalter in kurzem Abstand zu diesem angeordnet sind.

Insbesondere ergeben sich günstige Hebelverhältnisse, wenn der zumindest eine Niederhalter zum Schwenkgelenk beabstandet ist.

Sofern den Sockeln Widerlager für die Aufnahme von ausgreifenden Haltemitteln des abgelegten Daches zugeordnet sind, ist auch eine Dachbewegung nach unten verhindert. Das Dach ist damit vollständig gegen Bewegung gesichert. Die Widerlager können direkt an den Sockeln angeordnet sein, was konstruktiv sehr einfach ist.

Insbesondere können die Widerlager als Halbschalen oder ähnliche untergreifende Halterungen für die Auflage von aus der Fläche eines Dachaußenteils nach hinten vorstehenden Stiften vorgesehen sein. Damit müssen auch die Widerlager nicht auf eine eventuell lackierte Dachfläche aufdrücken, sondern können durch Aufsetzen auf diese Stifte verschleißfrei das Dach in seiner abgelegten Stellung sichern.

Eine einfache Konstruktion sieht vor, dass das Deckelteil über jeweils ein Mehrgelenk an den Sockeln gehalten ist.

Insbesondere kann das Mehrgelenk zwangsweise und ohne weitere Steuerungselemente bei seiner Öffnung eine gleichzeitige Gesamtanhebung des Deckelteils und eine Verkippung um eine horizontale Achse bewirken.

Im einfachsten Fall ist das Mehrgelenk ein Viergelenk Dieses kann zwei oder mehr um horizontale Achsen schwenkbare Lenker umfassen, die zueinander unterschiedlich orientiert und/oder unterschiedlich lang sind. Dann ist bei Aufstellen der Lenker automatisch und zwangsweise das Anheben des Deckelteils und sein Verkippen ohne Weiteres realisierbar.

Ein weiterer großer Vorteil der Erfindung ist, dass das Deckelteil mit den untergreifenden Sockeln modular ausgebildet und außerhalb des Fahrzeugs auf Funktion testbar sein kann, da es auch bei Öffnung im Freigabesinn der Durchtrittsöffnung für das Dach keine karosserieseitige Abstützung und somit kein Zusammenspiel mit dem Rohbau benötigt. Die Bewegung kann daher vollständig vor dem Einbau des Deckelteilmoduls in die Karosserie durchgeführt werden. Ein solches Modul ist daher separat beansprucht.

Es versteht sich, dass das erfindungsgemäße Deckelteil neben dem ersten Öffnungssinn zur Freigabe der Durchtrittsöffnung für das Dach auch gegensinnig in in einem zweiten Öffnungssinn zur Freigabe einer Ladeöffnung für Gepäck aufschwenken kann.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische Seitenansicht eines erfindungsgemäßen Cabriolet-Fahrzeugs in nach vorne abgebrochener Darstellung bei geschlossenem Dach und geschlossenem Deckelteil,
- Fig. 2: eine herausgezeichnete Seitenansicht des Daches nach Fig. 1 ohne die Karosseriekonturen während der Dachöffnung
- Fig. 3: eine perspektivische Ansicht des öffnenden Daches nach Fig. 2 von schräg vorne bei geöffnetem Deckelteil zur Freigabe einer Durchtrittsöffnung für das abzulegende Dach in einen karosserieseitigen Aufnahmeraum,
- Fig. 4: das in dem Aufnahmeraum abgelegte Dach in Seitenansicht mit darüber noch offen stehendem Deckelteil, von dem hier nur dieses untergreifende Trägerkörper gezeigt sind,
- Fig. 5: die Dach- und Deckelteilstellung nach Fig. 4 - wiederum sind nur die Trägerkörper gezeichnet - in perspektivischer Ansicht von schräg hinten rechts,
- Fig. 6: das in dem Aufnahmeraum abgelegte und an Auflagern abgestützte Dach in Seitenansicht mit darüber geschlossenem Deckelteil, von dem hier nur dieses untergreifende Trägerkörper gezeigt sind, die über ihre Niederhalter das abgelegte Dach in seiner Lage sichern,
- Fig. 7: die Dach- und Deckelteilstellung nach Fig. 6 - wiederum sind nur die Trägerkörper gezeichnet - in perspektivischer Ansicht von schräg hinten rechts.

Das erfindungsgemäße Cabriolet-Fahrzeug 1 kann ein mit zumindest einer Rücksitzreihe versehenes vier- oder mehrsitziges Fahrzeug oder auch ein Zweisitzer sein. Es umfasst ein bewegliches Dach 2, das in geschlossener Stellung mittelbar oder unmittelbar an einen Windschutzscheibenrahmen 5 angrenzt und als Retractable Hardtop (RHT) mehrere an ihrer Außenfläche voneinander getrennte und mehr oder minder plattenförmig ausgebildete Baueinheiten 3, 4 als Dachteile umfassen kann - oder alternativ als sog. Softtop mit einem gemeinsamen flexiblen Bezug (nicht gezeichnet) überspannt sein kann.

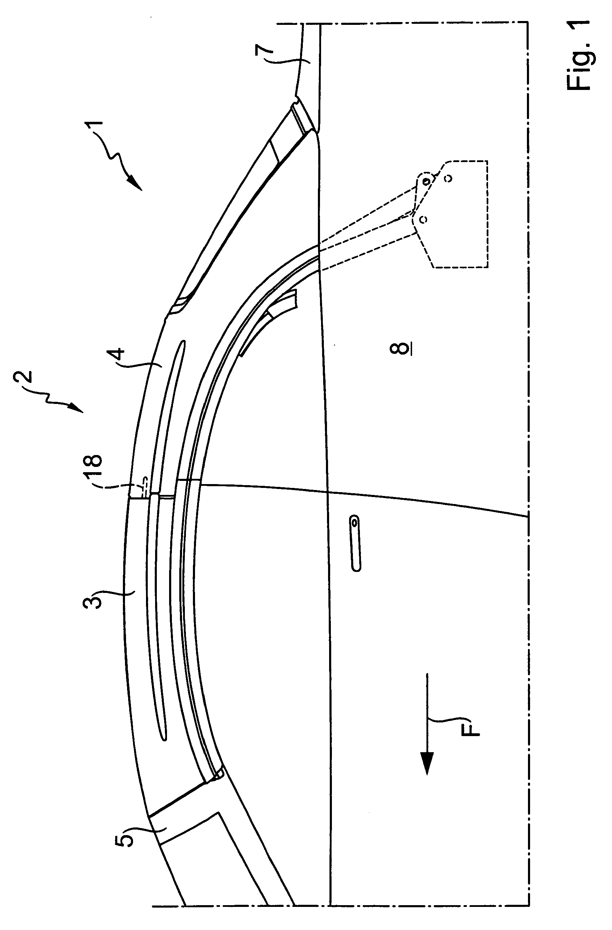

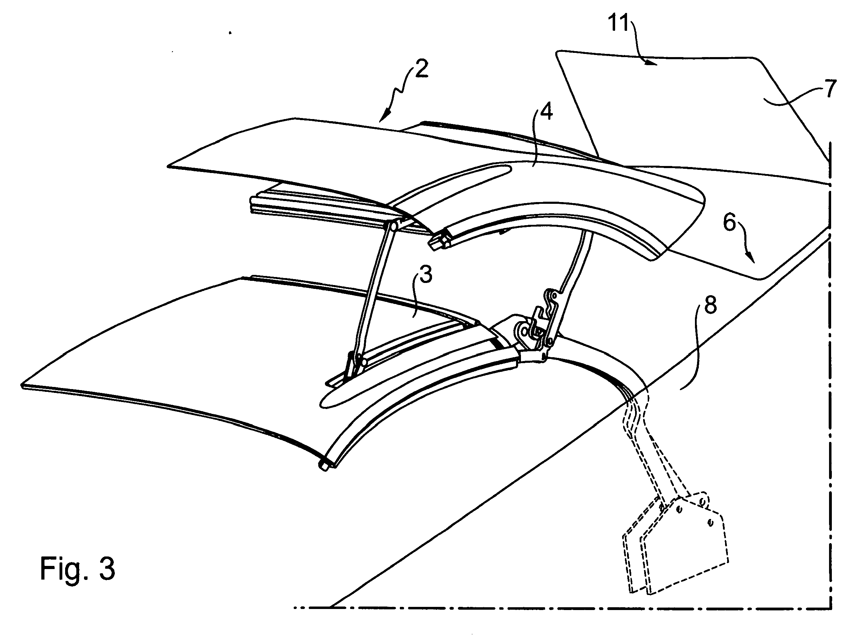

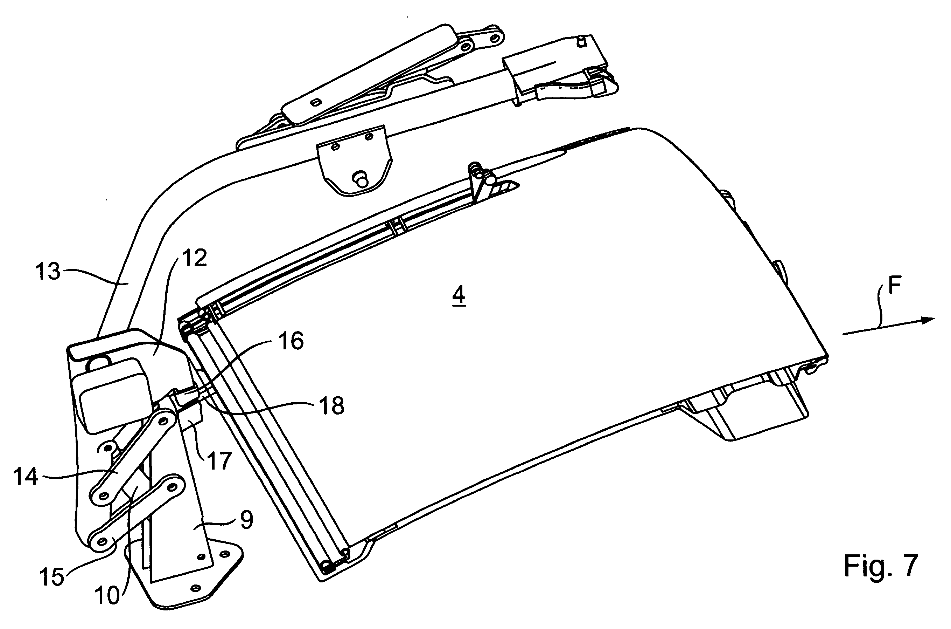

In jedem Fall ist das Dach 2 insgesamt bei seiner Öffnung abwärts und heckwärts verlagerbar. Zur Aufnahme des geöffneten Daches kann ein Aufnahmeraum 6 vorgesehen sein, der zumindest teilweise von einem Deckelteil 7 abdeckbar sein ist. Hier verschließt das gezeichnete Deckelteil 7 den Aufnahmeraum 6 vollständig ober- und heckseitig. Es dient dabei in Doppelfunktion zur Abdeckung des Aufnahmeraums 6 für das Dach 2 und eines Gepäckraums, der bei geschlossenem Dach 2 (Fig. 1; Fig. 7) den Aufnahmeraum 6 mit umfassen kann. Das Deckelteil 7 kann wahlweise zur Freigabe einer Durchtrittsöffnung für das Dach 2 (Fig. 3) oder zur Freigabe einer Ladeöffnung für Gepäck (nicht gezeichnet) aufbewegt werden, beispielsweise aufschwenken. Die unterschiedlichen Öffnungsbewegungen des Deckelteils 7 erfolgen hier gegensinnig zueinander.

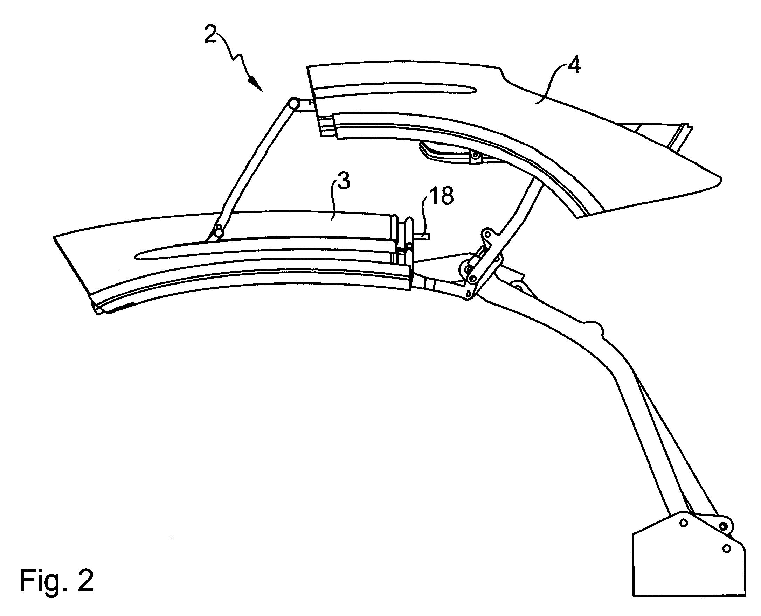

Bei der hier gezeigten speziellen Dachöffnungskinematik kann der hintere Dachteil 4 zunächst über den vorderen Dachteil 3 angehoben werden (Fig. 2) und daher in seiner geschlossenen Stellung (Fig. 2) auf dem Deckelteil 7 aufstehen. Die Dachöffnung kann daher beginnen, während das Deckelteil 7 noch geschlossen ist.

Das Deckelteil 7 ist im gezeichneten Ausführungsbeispiel über zwei seitliche, quer außen innerhalb der Karosserie 8 angeordnete Sockel 9 gehalten. Diese stehen beispielsweise auf dem Kofferraumboden, könnten jedoch auch seitlich gehalten sein. Sie tragen auch jeweils zumindest ein Antriebsorgan 10, hier einen aufragenden Hydraulikzylinder, zur Öffnung des Deckelteils 7 im Freigabesinn der Durchtrittsöffnung für das Dach 2. Diese Freigabe ist mit einer Aufwärts- und Heckwärtsverlagerung des vorderen Kantenbereichs 11 des Deckelteils 7 verbunden. Das Schließen des Deckelteils kann ebenfalls über die Antriebsorgane 10 und/oder die Gewichtskraft des Deckelteils 7 bewirkbar sein.

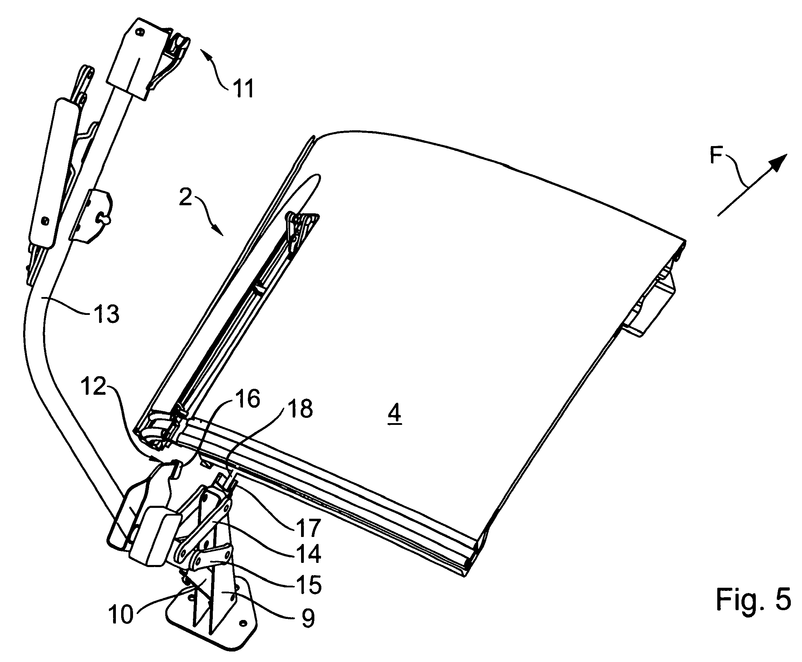

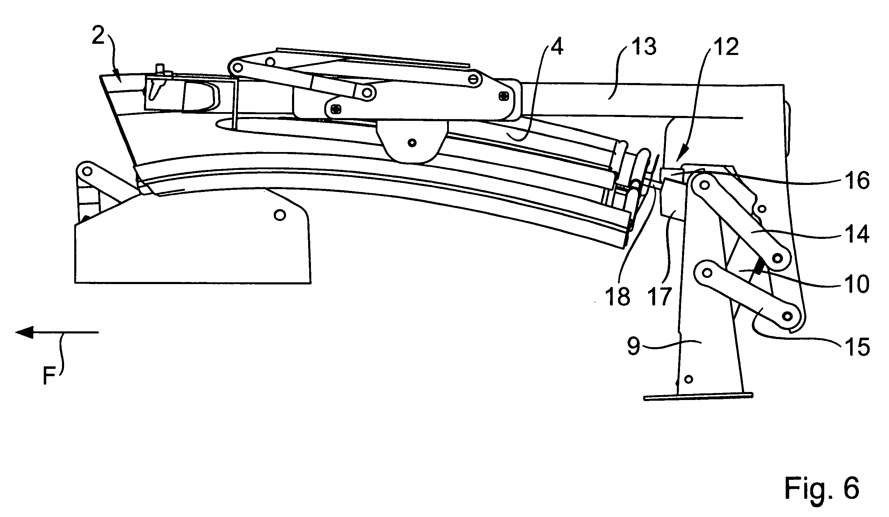

Über die Antriebsorgane 10 sind an den karosserieseitigen Sockeln 9 beweglich gehaltene Trägerkörper 13 für das Deckelteil 7 mit Kraft beaufschlagbar. Diese Trägerkörper 13 sind beispielsweise als Rohrrahmenstücke ausgebildet und können parallel zur Fahrtrichtung F oder zumindest mit einer Längskomponente verlaufen. Dabei untergreifen sie das Deckelteil 7. Sie können auch insgesamt Teil eines U-förmigen Hilfsrahmens sein. Vorzugsweise bleiben sie bei Kofferraumöffnung (nicht gezeichnet) in ihrer ungefähr horizontal liegenden Stellung nach Fig. 6, wohingegen sie bei Öffnung des Deckelteils 7 zur Freigabe der Durchtrittsöffnung für das Dach 2 mitbeweglich sind (Fig. 5).

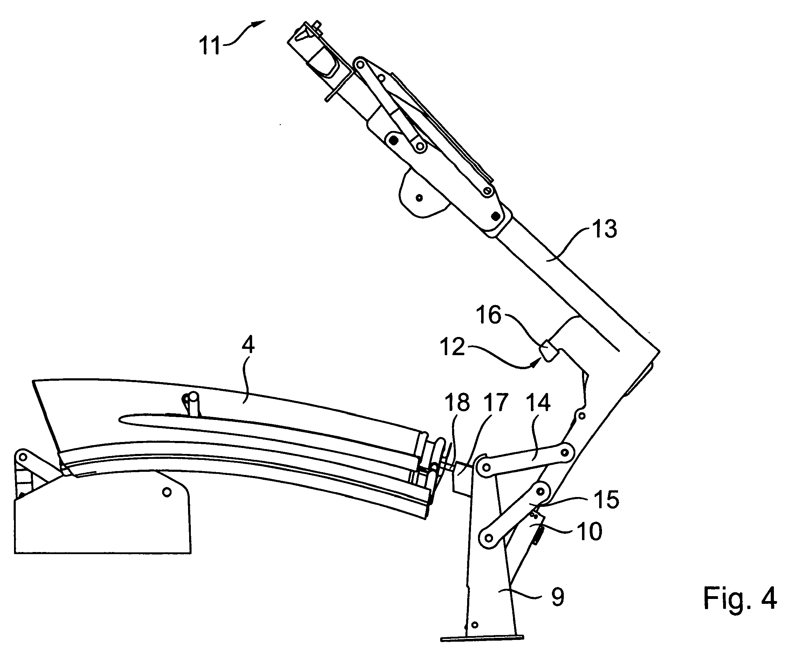

Zumindest einem der seitlichen Trägerkörper 13 ist ein Niederhalter 12 zur Lagesicherung des geöffneten Daches 2 zugeordnet, wie etwa in den Figuren 4 und 5 (Offenstellung des Niederhalters 12) bzw. 6 und 7 (Sicherungsstellung des Niederhalters 12) zu erkennen ist.

Die Trägerkörper 13 - und darüber das Deckelteil 7 - sind über zwei oder mehr um horizontale Achsen schwenkbare Lenker 14, 15, die zueinander unterschiedlich orientiert und/oder unterschiedlich lang sein können, eines Mehrgelenks, hier eines Viergelenks, schwenkbeweglich an den Sockeln 9 gehalten, somit auch der oder die diesen zugeordnete(n) Niederhalter 12. Dieses Mehrgelenk kann bei seiner Öffnung eine gleichzeitige Gesamtanhebung des Deckelteils 7 und eine Verkippung um eine horizontale Achse bewirkt, so dass der vordere Bereich 11 nach hinten aufschwenkt, ohne dass die hintere Kante in die Karosserie im Bereich einer Stoßstange abtauchen müsste. Eine Kollisionsgefahr mit der Stoßstange oder der Zwang, dort eine Ausnehmung zu schaffen, sind damit vermeidbar.

Insbesondere kann für eine gute Lagesicherung des Daches 2 an jedem der seitlichen Trägerkörper 13 ein Niederhalter 12 vorgesehen sein. Der zumindest eine Niederhalter 12 ist zum Schwenkgelenk beabstandet, ist dabei jedoch starr mit dem Trägerkörper 13 verbunden. Bei Kofferraumöffnung bleibt der Niederhalter 12, da dann die Trägerkörper nicht bewegt werden, in seiner Sicherungsstellung, so dass das ggf. abgelegte Dach unbewegt verbleibt.

Den Sockeln 9 sind des weiteren Widerlager 17 für die Aufnahme von ausgreifenden Haltemitteln 18 des abgelegten Daches 2 zugeordnet. Hier sind diese als nach oben offene und halbschalenförmige Auflager ausgebildet, in die während der Dachöffnung automatisch als Haltemittel Stifte 18 des Daches 2 eingreifen. Diese Stifte 18 stehen aus der Fläche eines Dachaußenteils, hier des hinteren Dachteils 4, nach hinten vor. Auf diese sind dann beim Zuschwenken der Trägerkörper 13 automatisch von oben die Niederhalter 12 aufsetzbar. Diese können an ihren ausgreifenden Enden mit elastischen Puffern 16 versehen sein.

Die Sockel 9 sind hier so angeordnet, dass sie hinter dem abgelegten Dach 2 in der Karosserie 8 stehen. Die Niederhalter 12 können dann in sehr dichtem Abstand vor den Sockeln 9 angeordnet sein und dennoch auf die nach hinten vorstehenden Stifte 18 des Daches 2 aufdrücken. Es ergibt sich dabei ein günstiger Hebelarm.

Das Deckelteil 7 ist mit den untergreifenden Sockeln 9 als insgesamt modulare Einheit ausgebildet. Da der hintere Rand des Deckelteils 7 während der Öffnung frei oberhalb der Karosserie 8 bewegt wird, kann dieses Modul ohne karosserieseitige Abstützung bereits vor der Montage in den Rohbau außerhalb des Fahrzeugs 1 auf Funktion getestet werden.

Da in der zur Dachaufnahme gegensinnigen Kofferraumöffnung die Trägerkörper 13 unbewegt bleiben, kann auch diese gegensinnige Bewegung bei Halterung allein über die seitlichen Sockel 9 außerhalb des Fahrzeugs 1 durchgeführt werden, was den Funktionstest erleichtert.

## Patentansprüche

1. Cabriolet-Fahrzeug (1) mit einem beweglichen Dach, das zumindest teilweise unterhalb eines Deckelteils (7) ablegbar ist, welches zumindest in einem ersten Öffnungssinn mit einem vorderen Bereich (11) heckwärts und aufwärts zur Freigabe einer Durchtrittsöffnung für das Dach (2) öffnungsfähig ist, wobei das Deckelteil (7) über Antriebsorgane (10) mit einer Antriebskraft im Öffnungs- und/oder Schließsinn beaufschlagbar ist, wobei die Antriebsorgane (10) karosserieseitigen Sockeln (9) zugeordnet sind, an denen Trägerkörper (13) für das Deckelteil (7) beweglich gehalten sind, die bei geschlossenem Deckelteil (7) von den Sockeln (9) mit zumindest einer Längskomponente in Fahrtrichtung (F) weisen und mit dem Deckelteil (7) zur Freigabe der Durchtrittsöffnung für das Dach (2) beweglich sind, wobei zumindest einem dieser Trägerkörper (13) ein Niederhalter (12) zur Lagesicherung des geöffneten Daches (2) zugeordnet und in Fahrtrichtung (F) vor dem Sockel (9) gelegen ist, **dadurch gekennzeichnet, dass** den Sockeln (9) eine Dachbewegung nach unten verhindernde Widerlager (17) für die Aufnahme von ausgreifenden Haltemitteln (18) des abgelegten Daches (2) zugeordnet sind.

2. Cabriolet-Fahrzeug (1) nach Anspruch 1,
**dadurch gekennzeichnet,**
**dass** die Trägerkörper (13) schwenkbeweglich gehalten sind und der zumindest eine Niederhalter (12) zu einem Schwenkgelenk der Trägerkörper (13) beabstandet ist.

3. Cabriolet-Fahrzeug (1) nach einem der Ansprüche 1 oder 2,
**dadurch gekennzeichnet,**
**dass** die Widerlager (17) als Halbschalen für die Auflage von aus der Fläche eines Dachaußenteils (4) nach hinten vorstehenden Stiften (18) vorgesehen sind, auf die von oben die Niederhalter (12) aufsetzbar sind.

4. Cabriolet-Fahrzeug (1) nach einem der Ansprüche 1 bis 3,
**dadurch gekennzeichnet,**
**dass** das Deckelteil (7) über jeweils ein Mehrgelenk (14; 15) an den Sockeln gehalten ist.

5. Cabriolet-Fahrzeug (1) nach Anspruch 4,
**dadurch gekennzeichnet,**
**dass** das Mehrgelenk (14; 15) bei seiner Öffnung eine gleichzeitige Gesamtanhebung des Deckelteils (7) und eine Verkippung um eine horizontale Achse bewirkt.

6. Cabriolet-Fahrzeug (1) nach einem der Ansprüche 1 bis 5,
**dadurch gekennzeichnet,**
**dass** das Mehrgelenk (14; 15) ein Viergelenk ist.

7. Cabriolet-Fahrzeug (1) nach einem der Ansprüche 3 bis 6,
**dadurch gekennzeichnet,**
**dass** das Mehrgelenk zwei oder mehr um horizontale Achsen schwenkbare Lenker (14; 15) umfasst, die zueinander unterschiedlich orientiert und/oder unterschiedlich lang sind.

8. Cabriolet-Fahrzeug (1) nach einem der Ansprüche 1 bis 7,
**dadurch gekennzeichnet,**
**dass** das Deckelteil (7) mit den untergreifenden Sockeln (9) modular ausgebildet und außerhalb des Fahrzeugs (1) auf Funktion testbar ist.

## Claims

1. A convertible vehicle (1) with a movable roof which can be stowed at least partly below a lid part (7) that can be opened, at least in a first opening direction, at a front region (11) rearwardly and upwardly to uncover a passage opening for the roof (2), onto which lid part (7) a drive force can be applied in the opening and/or closing direction via drive elements (10), said drive elements (10) being assigned to body-side bases (9) holding carrier bodies (13) for the lid part (7) in a movable manner, which carrier bodies (13) point in the direction of travel (F) from the bases (9) with at least one longitudinal component when the lid part (7) is closed and are movable together with the lid part (7) to uncover the passage opening for the roof (2), at least one of said carrier bodies (13) having a hold-down element (12) assigned to it to fix the opened roof (2) in position, said hold-down element (12) being arranged in front of the base (9) in the direction of travel (F),
**characterised in that**
the bases (9) have abutments (17) assigned to them to prevent a downward roof movement and to receive outwardly engaging holding means (18) of the stowed roof (2).

2. The convertible vehicle (1) according to claim 1,
**characterised in that**
the carrier bodies (13) are held in a pivoting manner and the at least one hold-down element (12) is spaced apart from a pivot joint of the carrier bodies (13).

3. The convertible vehicle (1) according to any one of claims 1 or 2,
**characterised in that**
the abutments (17) are provided as half shells to support pins (18) which protrude rearward from the surface of an outer roof part (4), onto which pins the hold-down elements (12) can be fitted from above.

4. The convertible vehicle (1) according to any one of claims 1 to 3,
**characterised in that**
the lid part (7) is held to the bases via a respective multiple joint (14; 15).

5. The convertible vehicle (1) according to claim 4,
**characterised in that**
when the multiple joint (14; 15) is opened, it causes simultaneous lifting of the entire lid part (7) and tilting about an horizontal axis.

6. The convertible vehicle (1) according to any one of claims 1 to 5,
**characterised in that**
the multiple joint (14; 15) is a four-bar linkage.

7. The convertible vehicle (1) according to any one of claims 3 to 6,
**characterised in that**
the multiple joint comprises two or more links (14; 15) which can be pivoted about horizontal axes and differ in their orientation to each other and/or in length.

8. The convertible vehicle (1) according to any one of claims 1 to 7,
**characterised in that**
the lid part (7) is provided in a modular manner with the bases (9) engaging from below and can be subjected to functional testing outside the vehicle (1).

## Revendications

1. Véhicule cabriolet (1) avec un toit mobile qui est escamotable, au moins partiellement, en dessous d'un élément de couvercle (7) que l'on peut ouvrir, au moins dans un premier sens d'ouverture, dans une région avant (11) vers l'arrière et vers le haut afin d'exposer une ouverture de passage pour ledit toit (2), élément de couvercle (7) sur lequel on peut appliquer une force d'entraînement dans la direction d'ouverture et/ou de fermeture au moyen d'éléments d'entraînement (10), ces derniers étant associés avec des embases (9) du côté de la carrosserie qui supportent, de manière mobile, des corps de support (13) pour l'élément de couvercle (7), lesdits corps de support (13) étant dirigés en direction de marche (F) à partir des embases (9) avec au moins un composant longitudinal lorsque l'élément de couvercle (7) est fermé et étant mobiles ensemble avec l'élément de couvercle (7) afin d'exposer l'ouverture de passage pour le toit (2), au moins l'un des corps de support (13) présentant un serre-flan (12) associé avec celui-ci afin de fixer le toit ouvert (2) en position, ledit serre-flan (12) étant disposé en avant de ladite embase (9) en direction de marche (F),
**caractérisé en ce que**
lesdites embases (9) présentent des contre-butées (17) associées avec celles-ci afin d'éviter un mouvement du toit vers le bas et afin de recevoir des moyens de support (18) du toit escamoté (2) qui s'engrènent extérieurement.

2. Véhicule cabriolet (1) selon la revendication 1,
**caractérisé en ce que**
les corps de support (13) sont supportés à manière de permettre leur pivotement et l'au moins serre-flan (12) est distant d'une articulation pivotante des corps de support (13).

3. Véhicule cabriolet (1) selon l'une quelconque des revendications 1 ou 2,
**caractérisé en ce que**
les contre-butées (17) sont réalisées sous forme de demi-coques destinés à supporter des broches (18) faisant saillie vers l'arrière à partir de la face d'un élément de toit extérieur (4) et sur lesquelles on peut poser les serre-flans (12) d'en haut.

4. Véhicule cabriolet (1) selon l'une quelconque des revendications 1 à 3,
**caractérisé en ce que**
l'élément de couvercle (7) est supporté sur les embases par un ensemble respectif à plusieurs articulations (14; 15).

5. Véhicule cabriolet (1) selon la revendication 4,
**caractérisé en ce que**
lors de l'ouverture de l'ensemble à plusieurs articulations (14; 15) celui-ci effectue un levage simultané de l'élément de couvercle (7) entier et un basculement autour d'un axe horizontal.

6. Véhicule cabriolet (1) selon l'une quelconque des revendications 1 à 5,
**caractérisé en ce que**
l'ensemble à plusieurs articulations (14; 15) est un ensemble à quatre articulations.

7. Véhicule cabriolet (1) selon l'une quelconque des revendications 3 à 6,
**caractérisé en ce que**
l'ensemble à plusieurs articulations comporte au moins deux articulations (14; 15) que l'on peut pivoter autour d'axes horizontaux et qui présentent des orientations différentes entre eux et/ou des longueurs différentes.

8. Véhicule cabriolet (1) selon l'une quelconque des revendications 1 à 7,
**caractérisé en ce que**
l'élément de couvercle (7) est réalisé de manière modulaire avec des embases (9) s'engrenant de dessous et de manière à permettre des tests de fonction en dehors dudit véhicule (1).
